# EUROPÄISCHE PATENTSCHRIFT

(11) **EP 1 246 034 B1**
(45) Veröffentlichungstag und Bekanntmachung des Hinweises auf die Patenterteilung: **24.05.2006**
(21) Anmeldenummer: 02450059.7
(22) Anmeldetag: 13.03.2002
(51) Int. Cl.: G05B 23/00, G05B 23/02

(54) **Verfahren zur Analyse und Bewertung von Messwerten eines offenen Prüfsystems**
Method for analyzing and estimating measurement values of an open inspection system
Procédé pour l'analyse et l'estimation de valeurs de mesure d'un système d'essai

(30) Priorität: 28.03.2001 AT 2272001 U
(43) Veröffentlichungstag der Anmeldung: 02.10.2002
(73) Patentinhaber: AVL List GmbH, 8020 Graz (AT)
(72) Erfinder: Harms, Klaus-Christoph Dr., 8051 Graz (AT); Beidl, Christian Dr., 8063 Eggersdorf (AT)
(74) Vertreter: Laminger, Norbert

(56) Entgegenhaltungen:
- EP-A- 0 720 004
- WO-A-96/13764
- DE-A- 19 923 688
- SATOSHI HORI ET AL: "D-IAL: A DIAGNOSTIC EXPERT SHELL WITH PLAUSIBLE REASONING MECHANISM" SYSTEMS & COMPUTERS IN JAPAN, SCRIPTA TECHNICA JOURNALS. NEW YORK, US, Bd. 23, Nr. 11, 1992, Seiten 96-107, XP000380841 ISSN: 0882-1666

## Beschreibung

Die Erfindung betrifft ein Verfahren zur Analyse und Bewertung von Meßwerten eines offenen Prüfsystems, in welchem ein Prüfling während eines Prüflaufes durch zumindest einen Meßkanal überwacht wird, welcher Meßkanal ein Signal an eine Auswerteeinheit zur Weiterverarbeitung liefert, wobei zumindest ein Plausibilitätsknoten mit zumindest einem Meßkanal gekoppelt ist und automatisiert eine Plausibilitätsaussage trifft.

Prüf- und Meßsysteme für Forschung und Entwicklung, insbesonders in der Fahrzeugtechnik und für beispielsweise Motor und Antriebstrang eines Fahrzeugs sind heute notwendigerweise selbst zu beinahe unüberschaubar komplexen und hochtechnisierten Produkten geworden. In vergleichsweise kurzer Prüfzeit fallen enorme Mengen an Prüfdaten an und werden aufgezeichnet bzw. gespeichert. Benutzerfreundliche Software-Werkzeuge erlauben auch umfangreiche Meßdatenauswertungen zur Bewertung der Prüfläufe und des Prüflings und insbesondere zur Optimierung seiner angestrebten Leistungsfähigkeit. Darüberhinaus gibt es neuartige Software-Pakete zur automatisierten Durchführung von Prüfläufen und zur selbsttätigen Ermittlung optimaler Betriebspunkte des Prüflings, die wesentlich zur Verkürzung der Entwicklungszeit und zur Steigerung der Qualität der Entwicklungsergebnisse und der Produkte beitragen.

Bei derlei Prüfläufen sind die Prüfstände, aber auch mobile Meßgeräte oder - apparturen, oft stundenlang in Betrieb, und das Entwicklungsergebnis hängt davon ab, ob während dieser langen Prüfdauer das gesamte System fehlerfrei gearbeitet hat. Der Benutzer muß sich darauf verlassen können, daß die Meß- und Prüfdaten signifikant und brauchbar sind. Ein kritischer Fehler, beispielsweise eine veränderte Meßempfindlichkeit eines Sensors, kann nicht nur enorme Kosten verursachen - Prüfstandskosten, Betriebsmittelkosten, Prüflingskosten, Personalkosten, etc. - sondern vor allem auch eine Verzögerung im Entwicklungsprozess bewirken, was mit extremen Kosten und Wettbewerbsnachteilen verbunden ist. Beispielsweise sind Software-Produkte zur Automatisierung von Prüfläufen und zur selbständigen Optimierung von etwa Motorbetriebsbedingungen in hohem Maß von der Zuverlässigkeit der Prüflaufdaten abhängig ist. Ein Instrumentarium, das die Plausibilität der Prüfergebnisse sicherstellt und unzulässige Abweichungen frühzeitig erkennt, trägt entscheidend zum Gebrauchswert und zur Wirtschaftlichkeit dieses Produktes bei.

Verfahren zum Erkennen von Fehlerzuständen sind selbstverständlich bereits bekannt, so etwa durch die DE 198 41 260 A1 für Fehlerzustände in Kraftfahrzeugen. Dabei wird mittels lokaler Diagnosemodule für Teilsysteme des Fahrzeuges deren Funktion überwacht und für die Steuerung dieses selben oder anderer Teilsysteme herangezogen. Es finden aber keinerlei Überprüfungen von Meßwerten der einzelnen Teilsysteme bzw. von deren Plausibilität statt.

Daher ist es notwendig, daß die weiter oben beschriebenen Meß- und Prüfeinrichtungen mit einem Instrumentarium ausgestattet werden, das in möglichst hohem Maß die Brauchbarkeit der Prüfresultate gewährleisten kann. Die Plausibilität und Qualität der erzielten Ergebnisse muß automatisch hinterfragt und dem Benutzer angezeigt werden - nicht nur nach einem durchgeführten Prüflauf, etwa zum Zeitpunkt der Datenauswertung anhand der gespeicherten Meßdaten, sondern möglichst frühzeitig, vorteilhafterweise bereits während des Prüflaufes. Ein Beispiel für eine derartige Plausibilitätsprüfung, die allgemein auch als FDIC (Failure Detection, Isolation and Correction)-Verfahren bezeichnet werden, ist in der EP 0 720 004 B1 beschrieben.

Solche Plausibilitäts- und Meßdaten-Qualitätsprüfeinrichtungen gibt es zur Zeit nur in äußerst bescheidenem Umfang und meistens nur bezogen auf streng definierte und in sich abgeschlossene Meßgeräte und Meßsysteme. Bekannt ist, daß einzelne Meßgeräte zu Anfang eines Prüflaufs einen Selbsttest durchlaufen und daß während des Prüflaufs gewisse Funktionstests der Meßgeräte durchgeführt werden können. Manche Meßsysteme verfügen auch über fallweise aufrufbare Kalibrier- und Diagnosemöglichkeiten. Auch gibt es einzeln zu parametrierende Überwachungsmöglichkeiten für z.B. die Grenzwerte und die Glattheit einzelner Meßsignale. So ist beispielsweise in der WO96/13764 ein Verfahren beschrieben, bei welchem für einen einzelnen Meßwert ein Vergleich mit spezifischen Kenngrößen des Meßsystems selbst als auch ein zweiter Vergleich mit für das überwachte System charakteristischen Regeln durchgeführt und das Ergebnis dieser Überprüfung gewichtet wird.

Nun sind aber für komplexere Meßaufgaben in Prüfsystemen, beispielsweise auf Prüfständen in der Fahrzeugtechnik, insbesonders auf Motorprüfständen, viele Meßketten vorhanden. Je nach dem Prüflaufziel, d.h. den Aussagen, die aus dem Prüflauf für den Prüfling getroffen werden sollen, haben diese einzelnen Meßketten unterschiedliche Relevanz. Die Plausibilität eines einzelnen Meßwertes, ermittelt etwa durch eine FDIC-Verfahren wie jenes der EP 0 720 004 B1, kann nun für das Prüflaufziel insgesamt sehr unterschiedliche Auswirkungen haben, was in den bislang üblichen Verfahren nicht berücksichtigt wird. Insbesonders für die Durchführung von Prüfläufen in der Entwicklung und Erprobung von komplexen Aggregaten wie etwa Verbrennungskraftmaschinen ist im Sinne einer Qualitätssicherung eine eindeutige Bewertung der Verläßlichkeit der Meßergebnisse erforderlich, die über die Plausibilität von einzelnen Meßwerten hinausgeht. Die Gesamtplausibilität eines Prüflaufs mußte bisher und im Allgemeinen von einem erfahrenen Ingenieur begutachtet werden, der einerseits persönliche Erfahrungswerte, vor allem aber physikalisch-technisch begründete Zusammenhänge zwischen den Meßdaten zur Anwendung bringen konnte. Automatisierte Plausibilitätsprüfsysteme, die flexibel an die Erfordernisse unterschiedlicher und komplexer Prüf- und Testeinrichtungen angepasst werden können, sind bisher nicht realsiert.

Die Aufgabe der vorliegenden Erfindung ist daher ein Verfahren, mit dem eine Aussage über den Wert der Plausibilitätsknoten und deren Resultate in bezug auf eine spezielle Meßaufgabe getroffen werden können. Damit soll ein neuer generischer Ansatz geschaffen werden, beruhend auf einem allgemein gültigen Konzept zur Meßdatenbewertung, insbesondere zur Bewertung der Plausibilität und Qualität der Meß- und Prüfdaten, welcher die Durchführung des Verfahrens unter Berücksichtigung der erforderlichen umfangreichen Prüfregeln erlaubt, die zum Teil in bestehende Geräte und Komponenten des Meßsystems, etwa eines Prüfstandes oder auch mobilen Meßgerätes, implementiert und /oder in einer Software-Bibliothek zur Verfügung gestellt sind. In weiterer Folge ist eine zusätzliche Aufgabe ein Verfahren, mit dem Aussagen über die Verläßlichkeit der Resultate des Prüfsystems in bezug auf die gewünschten Meßwerte möglich sind. Diese Verfahren sollen als weitere Aufgabe dahingehend das Plausibilitätsprüfsystem an die jeweils spezielle Aufgabe, d.h. den jeweils speziellen Prüfstand, die spezielle Meßappartur od. dgl. und deren aktuelle Konfiguration, anpassbar machen bzw. im Sinne von 'Plug & Measure' auch weitgehend selbsttätig anpassbar sein.

Zur Lösung der ersten Aufgabe ist das eingangs beschriebene Verfahren dadurch gekennzeichnet, dass die Plausibilitätsaussagen der einzelnen Plausibilitätsknoten automatisiert gemäß vorgegebenen Regeln in Beziehung zueinander gesetzt werden, wobei diese Regeln sowohl die Art und der Anzahl der Plausibilitätsknoten sowie deren allfällige, veränderliche Verknüpfung untereinander berücksichtigen und aus den Plausibilitätsaussagen der einzelnen Plausibilitätsknoten eine bewertete Plausibilität für zumindest einen der Meßwerte ermittelt wird. Durch diese Veränderlichkeit in der Verknüpfung der Plausibilitätsknoten kann schon dem Erfordernis der Flexibilität Rechnung getragen werden: Denn infolge der unterschiedlichsten Prüfaufgaben können Prüfling und Prüfsystem sowie die durchgeführten Prüfläufe gewissermaßen Unikate darstellen. Im Gegensatz zur bekannten "Gewichtung" des Meßwertes (zu sehen als Wert oder "Inhalt") einer Meßgröße zur Ermittlung eines Meßwert-Plausibilitäts-Wertes (wiederum zu sehen als Wert oder Inhalt) wird gemäß der vorliegenden Erfindung die Bewertung der zu einer Meßgröße (zu sehen als Größe oder "Struktur") gehörigen Plausibilitätsaussage selbst (ebenfalls zu sehen als Größe oder "Struktur") durchgeführt, unabhängig vom zugehörigen Meßwert und seinem Plausibilitäts-Wert, so dass eine "meßstrukturabhängig" bewertete, aber natürlich "meßwertbezogene" Plausibilität ermittelt wird. Erreicht wird dies vorteilhafterweise durch eine objektorientierte Software-Architektur für typischerweise ein Netzwerk von Plausibilitätsprüfknoten, welche jeweils an die spezielle Applikation angepaßt werden können, indem die zur aktuellen Konfiguration des Meßsystems gehörigen und also gerade relevanten Plausibilitäts-Prüfregeln aus der Bibliothek geladen werden. Dabei wird jede Regel jeweils einem Knoten zugewiesen, sodaß dieser die benötigten Eingangsdaten (Meßwerte, Symptomdaten der parallel zur Messung durchgeführten Simulationsrechnungen, die zur Prüfregel gehörigen Paramter, usw.) der Regel entsprechend verknüpft und so vorerst in bekannter Weise ein einzelne Plausibilitätsaussage trifft, die dann an einen übergeordneten Auswerte- und Anzeigemodul weitergeleitet wird, wo die einzelnen Plausibilitätsknoten in Beziehung zueinander gesetzt und deren Plausibilitätsaussagen dann aufgrund dieser Beziehungen und allenfalls unter Berücksichtigung des Meßzieles bewertet werden. Denn jenachdem, welches Ziel bei einem Prüflauf verfolgt wird, sind manche Meßgrößen kritisch oder unkritisch anzusehen, und jenachdem, wieviel Redundanz in den anzuwendenden Prüfregeln enthalten ist, kann der Plausibilitätsaussage eine unterschiedliche Aussagekraft zuerkannt werden

Die Plausibilitätsknoten sind in der allgemeinsten Form Regeln, die eine Aussage über die Plausibilität des von diesem Meßkanal gelieferten Meßwertes erstellen. Die anzuwendenden Plausibilitätsprüfregeln werden vor allem auf technisch-physikalischen Modellen beruhen. Aber auch an Prüfregeln aus dem Bereich der Computer gestützten Intelligenz ist gedacht. Zu einem gewissen Teil werden die Regeln allgemein, für quasi beliebige Signale, nutzbar sein, beispielsweise die auf der Analyse von Einzelsignalen beruhenden Prüfregeln zur Erkennung von Ausreißern und Sprungstellen im Signalverlauf. Zum größeren Teil werden die Prüfregeln aber auf den Gegebenheiten einer konkreten Art von Prüfling und Prüfsystem beruhen und damit häufig einer jeweils spezifischen Gruppe von Meßeinrichtungen zugeordnet werden können. Ein Beispiel dafür sind die Bilanzgleichungen, bei Motorprüfläufen etwa für den Massenfluß von der angesaugten Luft und dem eingebrachten Krafstoff hin zu den Substanzen im Abgas. Darüberhinaus können auch komplexe Prüfregeln, bei denen die Übereinstimmung der realen Welt mit der virtuellen Welt der Simulationsrechnungen gesucht wird,zur Anwendung kommen, beispielsweise für die Plausibilitätsbewertung der Indizierdaten aus der Analyse der indizierten Hochdruck- und Ladungswechselphase des Verbrennungsprozesses.

Die Plausibilitätsknoten können entweder durch die Art und Einbindung des Meßkanals selbst, dessen interne Schaltungsarchitektur od. dgl., allgemein gesprochen also hardware-technisch definiert sein, aber auch über die Software realisiert sein, sowie durch Mischformen zwischen diesen beiden gegensätzlichen Ausführungsformen.

Um eine rasche und einfach an viele verschiedene Situationen anpaßbare Plausibilitätsbewertung erreichen zu können, wird gemäß einem weiteren Merkmal der Erfindung zumindest ein Teil der Plausibilitätsknoten aus einer Gesamtheit von in einer Bibiliothek vordefinierten Plausibilitätsknoten ausgewählt. In der Bibliothek kann von einem Teil bis hin zur Gesamtheit aller Plausibilitätsknoten abgelegt sein. Die aktuelle Konfiguration eines Prüflaufs und damit die Gesamtheit der aktuell aktivierten Plausibilitätsknoten muss zwar als Teilmenge in der Bibliothek enthalten sein, ist aber eben stark variabel. Sie muß nicht notwendigerweise nur vom Operator bestimmt und dem System mitgeteilt werden, sondern kann auch durch künstliche Intelligenz erarbeitet sein oder optimiert werden. Diese schließt aus den physikalischen Gegebenheiten (in Bezug auf aktuell vorhanden Meßgrößen) und den softwaretechnischen Gegebenheiten (in Bezug auf aktuell vorhandene a-priori bekannte System-Parameter und virtuelle Größen der Simulation) auf eben die aktuelle Konfiguration und die zu aktivierenden Prüfknoten.

Das erfindungsgemäße Verfahren ist sowohl "on-line" zur Prüfung der Meßdaten bereits während eines Prüflaufes einsetzbar, als auch "off-line", beispielsweise zur Prüfung großer Datenmengen im Anschluß an Messungen, beispielsweise in Prototyp-Fahrzeugen auf Teststrecken.

Gemäß einem weiteren Merkmal ist vorgesehen, dass die Bibiliothek der Plausibilitätsknoten erweiterbar und veränderlich ist, beispielsweise mittels künstlicher Intelligenz. D.h., daß neue oder erweiterte Plausibilitätsknoten in die Bibliothek der Prüfmöglichkeiten aufgenommen werden können, sei es durch Programmierung durch den Menschen, durch künstliche Intelligenz, beispielsweise durch "selbständiges Lernen", Trainieren von neuronalen Netzen, etc. Dadurch kann ebenfalls die geforderte Flexibilität wie schon oben erwähnt in noch weiterem Umfang gewährleistet werden.

Im Sinne der Modularität ist gemäß einem weiteren Merkmal der Erfindung vorgesehen, dass die bewertete Plausibilität für verschiedene Teilsysteme separat bestimmt wird. Denn ein Prüfsystem besteht praktisch immer aus mehreren Teilsystemen, die beispielsweise intelligente Sensoren, Meßgeräte und Meßsysteme mit zusammengefassten Gruppen von Meßkanälen darstellen. Aber auch dem Erfordernis der Kaskadierbarkeit und Aufrüstbarkeit kann dadurch Rechnung getragen werden: Denn jeder Prüfstand erfährt Veränderungen im Grad seiner Ausstattung mit Meßtechnik, und ein Plausibilitätsprüfsystem sollte entsprechend mitwachsen können, hier speziell durch Verknüpfung von auch unabhängig voneinander betreib- und überwachbaren Teilsystemen.

Bei einem Verfahren nach zumindest einem der vorhergehenden Absätze können vorteilhafterweise gemäß einem weiteren Merkmal der Erfindung die Plausibilitätsaussagen der einzelnen Plausibilitätsknoten als auch die Art und Anzahl der vorhandenen Meßkanäle automatisiert gemäß vorgegebenen Regeln in Beziehung zueinander gesetzt und aus den Plausibilitätsaussagen der einzelnen Plausibilitätsknoten ein Wert für die Konfidenz der Plausibilität zumindest eines der Meßwerte des aktuellen Prüfsystems ermittelt werden. Schon a-priori aus der Zusammensetzung der Meßgeräte, Meßsysteme und Sensoren kann ein sogenannter Konfidenz-Pegel ermittelt werden, welcher bei Bedarf auch im Betrieb laufend aktualisiert werden kann, wobei zusätzlich eine Abhängigkeit von der gewählten Meßaufgabe berücksichtigt werden kann. So wird es auch möglich im Sinne einer Qualitätssicherung für bestimmte Meßaufgaben (z.B. unbemannter automatischer Prüfbetrieb) einen Mindest-Konfidenzpegel für etwa einen Prüfstand zu definieren.

Um die geforderte Flexibilität der Plausibilitäts- und Konfidenz-Überprüfung für jede aktuelle Konfiguration eines Prüflaufs zu gewährleisten, wird gemäß einem weiteren Erfindungsmerkmal bei jeder Veränderung der Art und/oder Anzahl der Plausibilitätsknoten und/oder der Art und/oder Anzahl der Meßkanäle der Wert für die Konfidenz zumindest eines der Meßwerte für das nunmehr veränderte Prüfsystem neu ermittelt und aktualisiert.

Vorteilhafterweise wird in den oben genannten Verfahren zur einfachen und raschen Berücksichtigung der Wert für die Konfidenz zusammen mit dem Meßwert weiterverarbeitet.

Gemäß einem speziellen Ausführungsbeispiel mit Erhaltung der Modularität des Systems jeweils ein Wert für die Konfidenz für verschiedene Teilsysteme separat ermittelt werden.

Wenn gemäß einem weiteren Merkmal der Erfindung rechnerisch aus einer Gruppe von Meßkanälen, Sensoren und/oder Plausibilitätsknoten ein oder mehrere Teilelemente ausgewählt, mit der aktuellen Konfiguration des Prüfsystems oder Teilsystems kombiniert und die hypothetische neue Konfidenz bestimmt wird, können jede Veränderung des Gesamtsystems in bezug auf ihre Beeinflussung der Plausibilität der Prüfergebnisse, der Verläßlichkeit der Meßergebnisse und unzulässige Abweichungen frühzeitig erkannt werden. Damit ist die Plausibilität und Qualität der erzielten Ergebnisse dem Benutzer nicht erst nach einem durchgeführten Prüflauf, sondern vorteilhafterweise bereits noch vor dessen Beginn signalisierbar, so dass bei negativen Auswirkungen der vorgenommenen oder geplanten Änderungen der damit keine brauchbaren Ergebnisse liefernde Testlauf gar nicht erst durchgeführt werden muss. Beispielsweise kann durch Hinzufügen eines bestimmten Meßkanals, welcher die Redundanz der Meßdaten mit einem geeigneten Vertrauensbereich erhöht, ein höherer Konfidenzpegel für das Gesamtsystem erreicht werden. Das System liefert dem Benutzer also automatisch oder auf seine Anfrage hin in Bezug auf ein allgemeines oder ein ganz bestimmtes Prüflaufziel hin eine Aussage, welche Konfidenz er mit seiner aktuellen Konfiguration zu erwarten hat und welche Konfidenz er durch Hinzunahme weiterer Komponenten erhalten könnte.

In weiterer Folge kann bei geeigneter Programmierung auch eine Aussage erfolgen, welche Möglichkeiten zur Verbesserung der Konfidenz zur Verfügung stehen und evtl. sogar, welche Möglichkeit bevorzugt gewählt werden sollten, wenn im Falle sich gegenüber der Ausgangskonfidenz veränderter, vorzugsweise erhöhter Konfidenz eine entsprechende Meldung erfolgt.

Die Vorteile der in den vorhergehenden Absätzen beschriebenen Erfindung und ihrer Merkmale bestehen in einem durchgängigen Konzept der Plausibilitätsprüfung für alle Teilsysteme eines Prüfsystemes und möglichen Plausibilitätsaussagen sowohl für Teilsysteme als auch für das Gesamtsystem. Es wird weiters ein Konfidenzniveau ermittelt, welches ein neues Maß für die Aussagekraft der Plausibilitätsaussagen und für die Eignung der Prüfstandskonfiguration für bestimmte Prüfaufgaben darstellt. Dabei ist ein hohes Maß an Flexibilität und auch Aufrüstbarkeit für neue Prüfaufgaben gegeben, bei geringem Bedienaufwand durch eine systemunterstützte teilautomatische Parametrierung im Sinn von ,Plug & Measure', auf aufgrund der integrierten und flexibel erweiterbaren umfangreichen Bibliothek an Prüfregeln für unterschiedliche Prüfstände und Aufgaben. Selbstverständlich ist das erfindungsgemäße Verfahren derart implementiert, dass es bei Prüfständen oder Prüfgeräten mit standardisierten Schnittstellen (ASAM) und nicht eingeschränkt auf bestimmte Hersteller einsetzbar ist.

In der nachfolgenden Beschreibung sollen einige der oben angesprochenen Konzepte und die gegenständliche Erfindung näher erläutert werden.

Die vorzugsweise aber nicht notwendigerweise softwaretechnisch im Sinn der objekt-orientierten Programmierung offener Systeme allgemein definierten Plausibilitätsprüfknoten werden für eine bestimmte Struktur des Systems aus Prüfling und Prüfsystem, beispielsweise einem Prüfstand, "aktiviert", in dem ihnen aus der vorhandenen, allerdings erweiterbaren bzw. anpassbaren Bibliothek eine Prüfregel und eine zugehörige Struktur zugewiesen werden. Eingangsgrößen sind eine Liste der für die Anwendung der Prüfregel benötigten Meßgrößen, bzw. ihrer Meßwerte, eine Liste der benötigten virtuellen Größen, bzw. ihrer Werte, und als a-priori Wissen eine Liste der benötigten Parameter, bzw. ihrer Werte. Die Ergebnisgrößen eines Plausibilitätsknotens sind allerdings nicht unbedingt endgültig definiert. Es können das sein z.B.: Plausibilität ja/nein, Bezug auf aktuelles Prüflaufziel, Beitrag zur Verläßlichkeit, d.h. Konfidenz, des aktuellen Teil- oder Gesamtsystems. Auch hardware- bzw. schaltungstechnische Plausibilitätsprüfknoten sind möglich, im einfachsten Fall etwa die Überprüfung ob ein Meßkanal überhaupt angeschlossen ist oder nicht, ob die entsprechende Datenverbindung hergestellt ist, ob ein bestimmter Mindest-Signalpegel erreicht und überschritten wurde, usw.

Dabei können immer wieder geeignete Prüfregeln erforscht werden, wobei die Erfahrungen und Werkzeuge der verschiedenen Bereiche der Simulationstechnik, Indiziertechnik, Verbrauchsmeßtechnik, Verbrennungsdiagnose, Emissionsmeßtechnik, Prüfstandsanwender, etc. zu nutzen sind. Es wird vorteilhaft sein, die Prüfregeln bereits in einer vorläufigen Darstellung in den verschiedenen Prüfstands-Meßgeräten und -Meßsystemen zu implementieren und zu erproben. Aufgrund der dabei gewonnenen Erkenntnisse und aufbauend auf dem universellen Framework des Plausibilitäts-Prüfsystems kann dann die auf eine Vielzahl von Applikationsmöglichkeiten abgestimmte Prüfregel-Bibliothek erstellt werden. Letzendlich müssen die neu entwickelten Prüfregeln und das neue Gesamtwerkzeug immer wieder validiert werden, d.h. für konkrete Systeme überprüft und allenfalls optimiert werden.

Das erfindungsgemäße Verfahren der Plausibilitätsprüfung und der Konfidenzpegelbestimmung wird bevorzugt in einem eigenständigen Gerät implementiert sein, das über eine Datennetzverbindung für objektorientiert programmierte Software-Module in ein bestehendes Prüfsystem einbezogen werden kann. Also beispielsweise ein eigener PC, der ausgestattet ist mit der Framework-Software für Plausibilitätsprüfungen allgemein und mit mindestens der Software-Bibliothek, die alle für den konkreten Prüfstand und Prüflauf vorgesehenen Prüfregeln enthält.

Anhand des nachfolgenden konkreten Beispieles aus der Motorprüfstands-Meßtechnik soll dies näher beschrieben werden. Ein bereits für die erfindungsgemäße Plausibilitäts- und Konfidenz-Prüfung ausgerüstetes Subsystem, beispielsweise eine Kraftstoffwaage, frägt zum Zeitpunkt der Systemkonfigurierung und -parametrierung über die Netzverbindung an, ob das "Master"-Gerät im Gesamtsystem vorhanden ist und also auf die Anfrage antwortet.

Falls nein, kann die Kraftstoffwaage maximal eine geräteinterne Prüfung durchführen und zur Anzeige bringen. Falls ja, wird die Plausibilitätsprüfung in Bezug auf die Kraftstoffwaage aktiviert: Die Datenverbindungen werden etabliert und es wird registriert, daß künftig von diesem Subsystem bestimmte Symptomdaten und evtl. auch Parameter geliefert und in den möglicherweise vielen zugehörigen Plausibilitäts-Prüfknoten zu den angestrebten Plausibilitätsaussagen verarbeitet werden können. Aus dieser Struktur-Information kann auch bereits eine Bewertung der künftigen Plausibilitätsaussagen berechnet werden, insbesondere in Bezug auf den Konfidenzpegel, also auf die aus der Struktur und der damit verbundenen Redundanz folgenden Aussagekraft der verschiedenen Plausibilitätsaussagen.

Wenn dann ein konkreter Prüflauf gestartet wird und Meßdaten anfallen, so erhalten die aktivierten Prüfknoten laufend die benötigten Eingangsdaten. Aus dieser inhaltlichen Information werden laufend die bewerteten Plausibilitätsaussagen generiert und dem Plausibilitäts-Prüfsystem angeboten. Auf diese Art kann rasch, noch während des Prüflaufs, erkannt werden, ob die Gültigkeit bzw. Brauchbarkeit des Prüflaufs gegeben ist oder nicht. Aber auch nach dem Prüflauf kann die Information als Endergebnis eingesehen werden. Auch eine Plausibilitätsprüfung nach dem Prüflauf aufgrund gespeicherter Prüflaufdaten ist möglich. Die Ergebnisanzeige kann beliebig zentral oder verteilt erfolgen.

Falls die am Prüfstand eingesetzte Kraftstoffwaage noch nicht für die Plausibilitätsprüfung eingerichtet ist und daher keine direkte Datenverbindung zum Master-Gerät herstellen kann, so kann der Master trotzdem aus den (zumindest zum Teil) auch im Prüstands-Datenerfassungsystem verfügbaren Meßwerten der Prüfstandswaage eine darauf abgestimmte Plausibilitätsprüfung durchführen.

Ermöglicht wird das durch die standardisierten Schnittstellen und Namenslisten für die Meßgrößen eines Prüfstandes, insbesondere eines Motorprüfstandes, der demgemäß ein offenes System darstellt.

Die spezielle Ausbildung des Datennetzes erlaubt eine weitgehend Hardwareunabhängige Gestaltung der Plausibilitätsprüfung. SW-Module, etwa Module von je zusammengehörigen Plausibilitäts-Prüfknoten, können in verschiedenen Rechnern zur Ausführung gebracht werden. Auch die Einbindung von speziellen Rechnern für das sogenannte DSP (Digital Signal Processing), beispielsweise zur effizienten Anwendung von Plausibilitätsprüfregeln auf hoch-dynamische Signalverläufe in Echtzeit ist möglich.

## Patentansprüche

1. Verfahren zur Analyse und Bewertung von Meßwerten eines offenen Prüfsystems, in welchem ein Prüfling während eines Prüflaufes durch zumindest einen Meßkanal überwacht wird, welcher Meßkanal ein Signal an eine Auswerteeinheit zur Weiterverarbeitung liefert, wobei zumindest ein Plausibilitätsknoten mit zumindest einem Meßkanal gekoppelt ist und automatisiert eine Plausibilitätsaussage trifft, **dadurch gekennzeichnet, dass** die Plausibilitätsaussagen der einzelnen Plausibilitätsknoten automatisiert gemäß vorgegebenen Regeln in Beziehung zueinander gesetzt werden, wobei diese Regeln sowohl die Art und der Anzahl der Plausibilitätsknoten sowie deren allfällige, veränderliche Verknüpfung untereinander berücksichtigen und aus den Plausibilitätsaussagen der einzelnen Plausibilitätsknoten eine bewertete Plausibilität für zumindest einen der Meßwerte ermittelt wird.

2. Verfahren nach Anspruch 1, **dadurch gekennzeichnet, daß** zumindest ein Teil der Plausibilitätsknoten aus einer Gesamtheit von in einer Bibiliothek vordefinierten Plausibilitätsknoten ausgewählt wird.

3. Verfahren nach Anspruch 2, **dadurch gekennzeichnet, dass** die Bibiliothek der Plausibilitätsknoten erweiterbar und veränderlich ist, beispielsweise mittels künstlicher Intelligenz.

4. Verfahren nach einem der Ansprüche 1, 2 oder 3, **dadurch gekennzeichnet, dass** die bewertete Plausibilität für verschiedene Teilsysteme separat bestimmt wird.

5. Verfahren nach zumindest einem der Ansprüche 1 bis 4, **dadurch gekennzeichnet, dass** die Plausibilitätsaussagen der einzelnen Plausibilitätsknoten als auch die Art und Anzahl der vorhandenen Meßkanäle automatisiert gemäß vorgegebenen Regeln in Beziehung zueinander gesetzt werden, und aus den Plausibilitätsaussagen der einzelnen Plausibilitätsknoten ein Wert für die Konfidenz der Plausibilität zumindest eines der Meßwerte des aktuellen Prüfsystems ermittelt wird.

6. Verfahren nach Anspruch 5, **dadurch gekennzeichnet, dass** bei jeder Veränderung der Art und/oder Anzahl der Plausibilitätsknoten und/oder der Art und/oder Anzahl der Meßkanäle der Wert für die Konfidenz zumindest eines der Meßwerte für das nunmehr veränderte Prüfsystem neu ermittelt und aktualisiert wird.

7. Verfahren nach Anspruch 5 oder 6, **dadurch gekennzeichnet, dass** der Wert für die Konfidenz zusammen mit dem Meßwert weiterverarbeitet wird.

8. Verfahren nach zumindest einem der Ansprüche 5 bis 7, **dadurch gekennzeichnet, dass** jeweils ein Wert für die Konfidenz für verschiedene Teilsysteme separat ermittelt wird.

9. Verfahren nach zumindest einem der Ansprüche 5 bis 8, **dadurch gekennzeichnet, dass** rechnerisch aus einer Gruppe von Meßkanälen, Sensoren und/oder Plausibilitätsknoten ein oder mehrere Teilelemente ausgewählt, mit der aktuellen Konfiguration des Prüfsystems oder Teilsystems kombiniert und die hypothetische neue Konfidenz bestimmt wird.

10. Verfahren nach Anspruch 9, **dadurch gekennzeichnet, dass** im Falle sich gegenüber der Ausgangskonfidenz veränderter, vorzugsweise erhöhter Konfidenz eine entsprechende Meldung erfolgt.

## Claims

1. Method for analysing and evaluating measured values of an open inspection and testing system, in which equipment under test is monitored during a test run through at least one measuring channel, which measuring channel supplies a signal to an evaluation unit for further processing, wherein at least one plausibility node is connected to at least one measuring channel and automatically issues a plausibility statement,
**characterised in that**
the plausibility statements of the individual plausibility nodes are automatically compared with one another according to predetermined rules, wherein these rules take into consideration both the type and the number of the plausibility nodes and their respective, variable linking with one another, and wherein an evaluated plausibility for at least one of the measured values is determined from the plausibility statements of the individual plausibility nodes.

2. Method according to claim 1,
**characterised in that**
at least some of the plausibility nodes are selected from a totality of plausibility nodes predefined in a library.

3. Method according to claim 2,
**characterised in that**
the library of plausibility nodes is expandable and variable, for example, by means of artificial intelligence.

4. Method according to any one of claims 1, 2 or 3,
**characterised in that**
the evaluated plausibility is determined separately for different subsystems.

5. Method according to at least one of claims 1 to 4,
**characterised in that**
the plausibility statements of the individual plausibility nodes and also the type and number of available measuring channels are automatically compared with one another according to predetermined rules, and that a confidence value for the plausibility of at least one of the measured values of the current testing system is determined from the plausibility statements of the individual plausibility nodes.

6. Method according to claim 5,
**characterised in that**
the confidence value for at least one of the measured values for the now-modified testing system is re-determined and updated with each change in the type and/or number of plausibility nodes and/or the type and/or number of measuring channels.

7. Method according to claim 5 or 6,
**characterised in that**
the confidence value is further processed together with the measured value.

8. Method according to at least one of claims 5 to 7,
**characterised in that**
a respective confidence value is determined separately for different subsystems.

9. Method according to at least one of claims 5 to 8,
**characterised in that**
one or more subsidiary elements are selected by means of calculation from a group of measuring channels, sensors and/or plausibility nodes, combined with the current configuration of the testing system or subsystem, and the new, hypothetical confidence is determined.

10. Method according to claim 9,
**characterised in that**
a corresponding notification is issued in the event of a change, preferably an increase, in confidence by comparison with the starting confidence.

## Revendications

1. Procédé d'analyse et d'estimation de valeurs de mesure d'un système d'essai ouvert, dans lequel une éprouvette est surveillée pendant un cycle d'essai par au moins un canal de mesure, lequel canal de mesure émet un signal vers une unité d'évaluation pour traitement ultérieur, au moins un noeud de vraisemblance étant couplé par au moins un canal de mesure et fournissant automatiquement une information de vraisemblance, **caractérisé en ce que** les informations de vraisemblance des noeuds de vraisemblance sont mises mutuellement en relation selon des règles prédéterminées, ces règles tenant compte mutuellement aussi bien du genre que du nombre des noeuds de vraisemblance ainsi que de leur liaison variable dans tous les cas, et en ce l'on détermine à partir des informations de vraisemblance des noeuds individuels de vraisemblance, une vraisemblance évaluée pour au moins l'une des valeurs de mesure.

2. Procédé selon la revendication 1, **caractérisé en ce qu'**au moins une partie des noeuds de vraisemblance est choisie dans la totalité des noeuds de vraisemblance prédéfinis dans une bibliothèque.

3. Procédé selon la revendication 2, **caractérisé en ce que** la bibliothèque des noeuds de vraisemblance est susceptible d'être élargie et est variable, par exemple en utilisant l'intelligence artificielle.

4. Procédé selon l'une des revendications 1, 2 ou 3, **caractérisé en ce que** la vraisemblance évoluée est déterminée séparément pour divers systèmes partiels.

5. Procédé selon au moins l'une des revendications 1 à 4, **caractérisé en ce que** les informations de vraisemblance des noeuds individuels de vraisemblance ainsi qu'également le genre et le nombre des canaux de mesure en réserve sont mis automatiquement et mutuellement en relation selon des règles prédéterminées, et **en ce que** l'on détermine, à partir des informations de vraisemblance des noeuds de vraisemblance individuels, une valeur de confiance de la vraisemblance d'au moins l'une des valeurs de mesures du système d'essai actuel.

6. Procédé selon la revendication 5, **caractérisé en ce que** pour chaque notification du genre et/ou du nombre des noeuds de vraisemblance et/ou du genre et/ou du nombre des canaux de mesure, on détermine et on actualise à nouveau la valeur de confiance d'au moins l'une des valeurs de mesure pour le système d'essai alors modifié.

7. Procédé selon la revendication 5 ou 6, **caractérisé en ce que** la valeur de confiance est retraitée en même temps que la valeur de mesure.

8. Procédé selon au moins l'une des revendications 5 à 7, **caractérisé en ce que** chaque valeur de confiance pour des systèmes partiels différents est déterminée séparément.

9. Procédé selon au moins l'une des revendications 5 à 8, **caractérisé en ce que**, par le calcul, l'on choisit, à partir d'un groupe de canaux de mesure, de capteurs et/ou de noeuds de vraisemblance un ou plusieurs éléments partiels, on les combine avec la configuration actuelle ou instantanée du système d'essai ou du système partiel et l'on détermine la nouvelle confiance hypothétique.

10. Procédé selon la revendication 9, **caractérisé en ce que** dans le cas où la confiance est modifiée, avantageusement augmentée par rapport à la confiance de sortie, on adresse un message de sortie correspondant.
